(19) Europäisches Patentamt
European Patent Office
Office européen des brevets

(11) **EP 4 593 059 A1**

(12) **EUROPEAN PATENT APPLICATION**
published in accordance with Art. 153(4) EPC

(43) Date of publication:
**30.07.2025 Bulletin 2025/31**

(21) Application number: **24858800.6**

(22) Date of filing: **12.10.2024**

(51) International Patent Classification (IPC):
*H01J 43/22* *(2006.01)*

(86) International application number:
**PCT/CN2024/124318**

(87) International publication number:
**WO 2025/045273 (06.03.2025 Gazette 2025/10)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **05.12.2023 CN 202311656564**

(71) Applicant: **China Building Materials Academy Beijing 100024 (CN)**

(72) Inventors:
- **CAI, Hua**
  **Beijing 100024 (CN)**
- **LIU, Hui**
  **Beijing 100024 (CN)**
- **BO, Tiezhu**
  **Beijing 100024 (CN)**
- **JIA, Jinsheng**
  **Beijing 100024 (CN)**
- **ZHAO, Xuan**
  **Beijing 100024 (CN)**
- **LI, Shangtong**
  **Beijing 100024 (CN)**
- **MA, Jing**
  **Beijing 100024 (CN)**
- **LIAN, Jiao**
  **Beijing 100024 (CN)**
- **XIE, Shiyong**
  **Beijing 100024 (CN)**
- **QIN, Wenjing**
  **Beijing 100024 (CN)**
- **LI, Shuaiqi**
  **Beijing 100024 (CN)**
- **LIU, Chang**
  **Beijing 100024 (CN)**
- **ZHANG, Kangwei**
  **Beijing 100024 (CN)**
- **LI, Ang**
  **Beijing 100024 (CN)**
- **PAN, Hualong**
  **Beijing 100024 (CN)**

(74) Representative: **Cabinet Chaillot**
**16/20, avenue de l'Agent Sarre**
**B.P. 74**
**92703 Colombes Cedex (FR)**

(54) **MICRO-CHANNEL PLATE, PREPARATION METHOD THEREFOR AND USE THEREOF**

(57)     The present invention provides a microchannel plate, a preparation method and application thereof, where the microchannel plate is provided with a large number of channels penetrating in the thickness direction. On one side of an inlet end face of the microchannel plate, a flared end face of each channel is a hexagonal tapered bore; and in a cross-section perpendicular to an axial direction of each channel, the flared end face of the channel has an outer edge that is hexagonal and an inner edge that is circular. The present invention proposes a hexagonal special-shaped flared microchannel plate with an array of micropores having hexagonal tapered bores in the end face and cylindrical inside, where the circles in the form of a hexagonal packed periodic array is replaced with the hexagons in the form of a hexagonal close-packed periodicarray, so that the close-packed coefficient of the channel array of the microchannel plate increases from 0.907 when the existing circular channels are arranged in a hexagonal manner to 1 when the hexagonal channels are arranged in a hexagonal manner, so that when the flared end face channel wall thickness of the channel of the microchannel plate is ≥ 100 nm, an open area ratio of the microchannel plate is ≥ 91%. The present invention significantly improves the open area ratio of the input surface of the microchannel plate, improves the detection efficiency of the microchannel plate for an input signal, while avoiding generation of a flared tip to cause a tip discharge, and thus is more suitable for practical use.

EP 4 593 059 A1

FIG. 1

**Description**

**Technical Field**

The present invention relates to the technical field of electronics, and more particularly to a microchannel plate, a preparation method and application thereof.

**Background Art**

A microchannel plate is a glass-based functional material which is capable of parallel multiplication of a two-dimensional spatially distributed stream of charged particles and consists of millions of glass capillaries with micron-sized diameters. Each independent hollow glass channel wall has a secondary electron emission layer and an electron conduction layer, after charged particles enter its channel, secondary electron avalanche emission and weak current amplification can be achieved. The microchannel plate has the advantages of high time resolution, high spatial resolution, high signal amplification, compact structure and low noise, and is widely used in the fields of low-light night vision, high-energy physics detection, precise timing, high-energy particle detection, medical detection, mass spectrometry, scientific instruments and so on.

An open area ratio (OAR) of the microchannel plate is a significant parameter because charged particles are effectively multiplied only after entering the channel of the microchannel plate. The open area ratio of the microchannel plate determines the detection efficiency of the microchannel plate and affects a noise factor of the microchannel plate to some extent. The open area ratio refers to a ratio of a channel opening area of an effective area of the microchannel plate to the entire effective area. Thinning the channel wall can increase the open area ratio of the microchannel plate, but too thin a pore wall can reduce the mechanical strength of the microchannel plate, which cannot meet the needs of practical use. Thus, the microchannel plate typically has an open area ratio of between 55% and 65%.

In the prior art, there is a process in which the channel port of the input end face of the microchannel plate is funneled, i.e., an end face of the microchannel plate is flared so that the open area ratio is up to 70% or even 90%. However, when the open area ratio reaches 90% by making the end face of the microchannel plate be flared, the flared end face of the microchannel plate will form a flared tip. This kind of flared tip is very easy to cause tip discharge when it is used in high field application scenario, which will cause damage of the microchannel plate and even instrument, and is not conducive to practical use.

**Summary of the Invention**

A main objective of the present invention is to provide a microchannel plate, a preparation method and application thereof, and a technical problem to be solved thereby is how to provide a microchannel plate with a high open area ratio, which does not induce a tip discharge when used in a high field strength application scenario, thus it is more suitable for practical use.

The objective of the present invention and the technical problem to be solved thereby are achieved by the following technical solutions. A microchannel plate according to the present invention is provided with a plurality of a larger number of channels penetrating in the thickness direction; on one side of an inlet end face of the microchannel plate, a flared end face of each channel is a hexagonal tapered bore; in a cross-section perpendicular to an axial direction of each channel, the flared end face of the channel has an outer edge that is hexagonal and an inner edge that is circular.

The objective of the present invention and solving the technical problem thereof can be further achieved by the following technical measures.

In some embodiments, the microchannel plate has a taper angle of from 8° to 55°; where the taper angle is an angle between a central axis of the channel and a conical surface at an open end of the channel.

In some embodiments, according to the microchannel plate, the flared end face of the channel has a taper depth of from 0.5 d to 6 d and d is a diameter of the channel.

In some embodiments, according to the microchannel plate, the microchannel plate has an open area ratio of $\geq$ 91% and the channel has a flared end face channel wall thickness of $\geq$ 100 nm.

In some embodiments, according to the microchannel plate, the flared end face is provided with high secondary electron yield species, the high secondary electron yield species being any one of $SiO_2$, $MgO$, $(Ba,Sr)TiO_3$, $RuO_2$, $Al_2O_3$, $CsI$, $CsTe$, $KBr$, $ZnO$, $SrO$, $Y_2O_3$, $B_2O_3$, $ZnO$, $NaCl$, or a diamond film.

The objective of the present invention and the technical problem to be solved thereby are also achieved by the following technical solutions. According to the preparation method of the microchannel plate of the present invention, the method includes the following steps of:

　　(1) successively nesting a third cladding tube, a second cladding tube and a first cladding tube from the outside to the inside to constitute a hybrid cladding tube; where the hybrid cladding tube is nested with a core rod to form a hybrid glass rod-in-tube;

the core rod is cylindrical, the first cladding tube has a shape of being circular inside and hexagonal outside, the second cladding tube has a shape of being hexagonal both inside and outside, and the third cladding tube has a shape of being hexagonal both inside and outside; and
the first cladding glass, the second cladding glass and the third cladding glass have a pre-set etching property, and an etching rate of the first cladding glass ≥ an etching rate of the second cladding glass > an etching rate of the third cladding glass;

(2) forming the hybrid glass rod-in-tube into a solid wafer, and removing a core glass in the solid wafer to obtain a microchannel plate wafer with a channel;
(3) performing flared etching on a first end face of the microchannel plate wafer; at the flared end face of each of the channels, the first cladding glass is completely etched and removed, the second cladding glass is partially etched and removed, the inner and outer edges of the third cladding glass are hexagonal, forming a honeycomb structure, so that the flared end face of the channel is a hexagonal tapered bore to obtain a flared microchannel plate wafer; and
(4) preparing the flared microchannel plate wafer into a microchannel plate.

The objective of the present invention and solving the technical problem thereof can be further achieved by the following technical measures.

In some embodiments, according to the preparation method, the first cladding tube has an channel diameter of from 2 μm to 50 μm.

In some embodiments, according to the preparation method, the etching rate of the first cladding glass is from 25 nm/min to 100 nm/min; the etching rate of the second cladding glass is from 1 nm/min to 50 nm/min; and the etching rate of the third cladding glass is from 0.01 nm/min to 25 nm/min.

In some embodiments, according to the preparation method, the first cladding glass, the second cladding glass, and the third cladding glass are resistant to acid corrosion, and the core glass is acid-corrodible; in step (2), the core glass is removed by acid corrosion.

The objective of the present invention and the technical problem to be solved thereby are also achieved by the following technical solutions. Application of the microchannel plate according to the present invention in an image intensifier, an ion detector or a detection instrument.

According to the above-mentioned technical solution, the microchannel plate, a preparation method and application thereof provided by the present invention at least have the following advantages:
The present invention proposes a microchannel plate having an inlet end face with a hexagonal special-shaped flared pore which has hexagonal tapered bores in the end face and inner cylindrical micropores, where the circles in the form of a hexagonal packed periodic array is replaced with the hexagons in the form of a hexagonal close-packed periodic array, so that the close-packed coefficient of the multichannel array of the microchannel plate increases from $\pi/(2\sqrt{3})(\approx 0.907)$ when the existing circular channels are arranged in a hexagonal manner to 1 when the hexagonal channels are arranged in a hexagonal manner, and the open area ratio is increased by more than 10.25% under the condition of the same channel wall thickness, so that although a flared end face channel wall thickness of the channel of the microchannel plate is ≥ 100 nm, an open area ratio of the microchannel plate is ≥ 91%. The open area ratio of the input surface of the microchannel plate is significantly improved, the detection efficiency of the microchannel plate for the input signal is improved, and the tip discharge caused by the flared tip is avoided at the same time, so that the application scenario of the microchannel plate is expanded to cover the high/medium/low-surface electric field intensity application scenario, and the practicability of the flared microchannel plate is greatly improved.

The above description is only an overview of the technical solution of the present invention, in order that the technical means of the present invention may be more clearly understood and readily put into practical effect in accordance with the teachings of the present specification, reference will now be made in detail to the preferred embodiments of the present invention and the accompanying drawings.

**Brief Description of the Drawings**

FIG. 1 is a schematic structural diagram showing a microchannel plate from a first perspective view according to some embodiments;
FIG. 2 is a schematic structural diagram showing a microchannel plate from a second perspective view according to some embodiments;

FIG. 3 is a schematic diagram showing calculation of the open area ratio of microchannel plate according to some embodiments;

FIG. 4 is a schematic structural diagram showing a hybrid glass rod-in-tube according to some embodiments;

FIG. 5 is a schematic structural diagram showing a microchannel plate wafer according to some embodiments;

FIG. 6 is a schematic evolution structural diagram showing an end face during flaring of a microchannel plate wafer according to some embodiments;

FIG. 7 is a schematic structural diagram showing a flared microchannel plate wafer according to some embodiments;

FIG. 8 is a schematic structural diagram showing a conventional funnel-shaped microchannel plate according to Comparative Example 1;

FIG. 9 is a schematic structural diagram showing a conventional funnel-shaped microchannel plate according to Comparative Example 2;

FIG. 10 is a schematic diagram showing calculation of a conventional funnel-shaped microchannel plate open area ratio;

FIG. 11A is a schematic diagram showing a hexagonal tapered microchannel plate used in an image intensifier according to the present invention;

FIG. 11B is a schematic diagram showing a hexagonal tapered microchannel plate used in a mass spectrometer according to the present invention; and

FIG. 11C is a schematic diagram showing a hexagonal tapered microchannel plate used in an enhanced image intensifier according to the present invention.

**Description of reference numerals:**

100. microchannel plate; 101. microchannel plate wafer; 102. microchannel plate wafer in a first flared stage; 103.microchannel plate wafer in a second flared stage; 104. flared microchannel plate wafer;

1. solid border of microchannel plate; 2. channel; 3. cladding glass of flared end face; 11. microchannel plate electrode; 11. conductive electrode; 12. high secondary electron yield species; 3-11. first cladding glass; 3-12. second cladding glass; 3-13. third cladding glass; 2-A.corerod; 3-A. hybrid cladding tube; 3-B. hybrid glass rod-in-tube; 3-C. cladding glass of end face of microchannel plate wafer; 3-21. first cladding glass of microchannel plate wafer; 3-2. second cladding glass of microchannel plate wafer; 3-23. third cladding glass of microchannel plate wafer; 3-1. projection view of the first cladding glass on the flared end face; 3-2. projection view of the second cladding glass on the flared end face; 3-3. projection view of the third cladding glass on the flared end face;

4. channel diameter; 5. opposite sides distance of hexagonal channel of flared end surface; 6. channel wall thickness of flared end face; 7. channel pitch of microchannel plate; CA. central axis of channel; $\theta$. taper angle;

200. conventional funnel-shaped microchannel plate; 201. conventional funnel-shaped microchannel plate with a large open area ratio; 8. cladding glass of the conventional funnel-shaped end face; 8-1. projection view of cladding glass on the flared end face; 8-2. cladding glass of conventional funnel-shaped microchannel plate on the flared end face; 8-10. cladding glass of funnel-shaped microchannel plate; 8-11. flared tips of input end face of a funnel-shaped microchannel plate with a large open area ratio; 9. diameter of circular channel of conventional funnel-shaped microchannel plate on the flared end face; 10. channel wall thickness of conventional funnel-shaped microchannel plate on the flared end face;

400. image intensifier; 410. input window of image intensifier; 411. photocathode; 420. fiber optic plate (FOP) for image intensifier; 421. phosphor screen; 430. vacuum container;

500. mass spectrometer; 510. ionization unit of mass spectrometer; 520. analysis unit of mass spectrometer; 530. ion detection unit of mass spectrometer; 531. anode plate of ion detection unit for mass spectrometer; 600. enhanced imaging detector; 601. photocathode for enhanced imaging detector; 610. fiber optic taper (FOT) for enhanced imaging detector; 611. phosphor screen for enhanced imaging detector; 620. readout sensor for enhanced imaging detector.

**Detailed Description of the Invention**

In order to further explain the technical means and effects of the present invention for achieving the intended objective, a microchannel plate, a preparation method and application thereof, its specific embodiments, structures, features and effects according to the present invention will be described in detail hereinafter with reference to the accompanying drawings and preferred embodiments. In the following description, various references to "one embodiment" or "an embodiment" are not necessarily to the same embodiment. Further, the particular features, structures, or characteristics of one or more embodiments may be combined in any suitable manner.

These examples are provided so that the present disclosure will be thorough and complete, and will fully convey the scope of the present invention to a person skilled in the art. It should be noted that the relative arrangement of parts and steps, components of materials, numerical expressions and values set forth in these examples are to be construed as merely illustrative, and not limitative, unless otherwise specifically indicated.

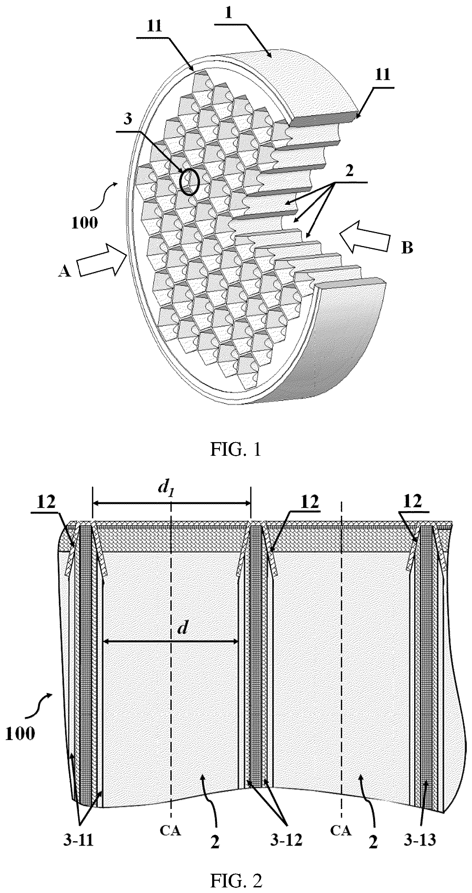

A microchannel plate 100 according to an embodiment of the present invention, as shown in FIGS. 1 and 2, is provided with a large number of channels 2 penetrating in the thickness direction; on one side of an inlet end face of the microchannel plate 100, a flared end face of each channel 2 is a hexagonal tapered bore; and in a cross section perpendicular to an axial direction of each channel 2, the flared end face of the channel 2 has an outer edge that is hexagonal and an inner edge that is circular.

According to the present invention, circles in the form of a hexagonal packed periodicarray is replaced with hexagons in the form of a hexagonal close-packed periodic array for inventing a hexagonal special-shaped flared microchannel plate 100 with an array of micropores having hexagonal tapered bores in the end face and cylindrical inside, so that the close-packed coefficient of the channel array of the microchannel plate 100 increases from 0.907 when the existing circular channels are arranged in a hexagonal manner to 1 when the hexagonal channels are arranged in a hexagonal manner. The specific calculation procedure is as follows.

In the embodiment of the present invention, the through hole 2 of the microchannel plate 100 is flared with hexagonal tapered bores in end face and to be cylindrical inside, and a plurality of flared channels are in a hexagonal close packing. The open area ratio refers to a ratio of a channel opening area of an effective area of the microchannel plate 100 to the entire effective area. As shown in FIGS. 1 to 3, the open area ratio of the microchannel plate 100 of the present invention is calculated as follows:

D is a pitch of the channel 2;

$d_1$ is the opposite sides distance of the hexagonal hole on the flared end face of the present invention;

according to the definition of the close-packed hexagonal packing principle and the open area ratio, it can be derived that the open area ratio $OAR_1$ of the microchannel plate 100 of the present invention is:

$$OAR_1 = \frac{S11 + S12 + S13}{S1} \quad \text{(Formula 1)}$$

$$S11 = \frac{1}{2} \times \frac{d_1}{\sqrt{3}} \times \frac{d_1}{2} = \frac{d_1^2}{4\sqrt{3}} \quad \text{(Formula 2)}$$

$$S11 = S12 = S13 \quad \text{(Formula 3)}$$

$$S1 = \frac{1}{2} \times \frac{\sqrt{3}D}{2} \times D = \frac{\sqrt{3}D^2}{4} \quad \text{(Formula 4)}$$

i.e.,

$$OAR_1 = \left(\frac{d_1}{D}\right)^2 \quad \text{(Formula 5)}$$

The microchannel plate 100 of the present invention has a flared end face channel wall thickness m.

$$m = D - d_1 \quad \text{(Formula 6)}$$

As can be seen from (Formula 5), an opening coefficient of the flared end face of the microchannel plate 100 of the present invention is 1. Accordingly, the microchannel plate 100 of the present invention can satisfy the flared end face channel wall thickness of $\geq 100$ nm while having an open area ratio of $\geq 91\%$. The open area ratio of the input surface of the microchannel plate is significantly improved, the detection efficiency of the microchannel plate for the input signal is improved, and the tip discharge caused by the flared tip is avoided at the same time, so that the application scenario of the microchannel plate is expanded to cover the high/medium/low-surface electric field intensity application scenario, and the practicability of the flared microchannel plate is greatly improved.

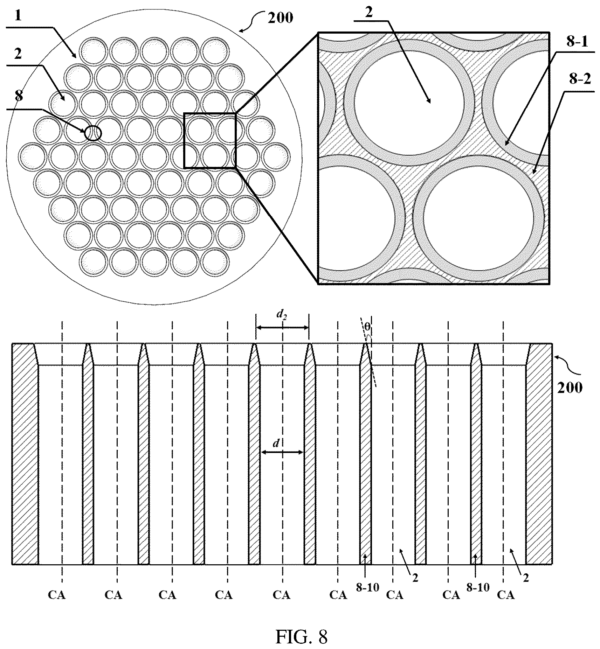

As shown in FIGS. 8-10, according to a definition of the circles in the form of a hexagonal packing principle and the open area ratio, it can be derived that the open area ratio $OAR_2$ of the conventional funnel-shaped microchannel plate 200 and the conventional funnel-shaped microchannel plate with a large open area ratio 201 is:

$$OAR_2 = \frac{S21 + S22 + S23}{S1} \quad \text{(Formula 7)}$$

$$S21 = \frac{\pi}{6} \times \left(\frac{d_1}{2}\right)^2 = \frac{\pi d_1^2}{24} \quad \text{(Formula 8)}$$

$$S21 = S22 = S23 \quad \text{(Formula 9)}$$

$$S1 = \frac{1}{2} \times \frac{\sqrt{3}D}{2} \times D = \frac{\sqrt{3}D^2}{4} \quad \text{(Formula 4)}$$

i.e.,

$$OAR_2 = \frac{\pi}{2\sqrt{3}}\left(\frac{d_1}{D}\right)^2 \approx 0.907\left(\frac{d_1}{D}\right)^2 \quad \text{(Formula 10)}$$

The flared end face channel wall thickness is f,

$$f = D - d_2 \quad \text{(Formula 11)}$$

For detection resolution, a typical microchannel plate open area ratio is at least 55% to 65%, the microchannel plate channel pitch is 2.50 $\mu$m to 62.50 $\mu$m, and the preferred microchannel plate channel pitch is 2.50 $\mu$m to 18.75 $\mu$m. To avoid flared tip discharge in high/medium surface electric field intensity scenarios, a funnel-shaped microchannel plate is required to have a flared end face channel wall thickness of $f \geq 100$ nm. According to (Formula 10), the funnel-shaped microchannel plate open area ratio is < 90.5%, and in a preferred microchannel plate, if the funnel-shaped microchannel plate has a flared end face channel wall thickness of $f \geq 100$ nm, the funnel-shaped microchannel plate open area ratio is <89.8%, the flared end face channel wall thickness of $f \geq 100$ nm cannot be achieved, when the funnel-shaped microchannel plate open area ratio is $\geq 91\%$.

In some embodiments, the microchannel plate 100 has a taper angle $\theta$ of 8° to 55°; the taper angle $\theta$ is an angle between a central axis CA of the channel and a conical surface at an open end of the channel. When the taper angle is too small, the channel wall is easily damaged, and too large taper angle is not conducive to the effective multiplication of incident particles by collision reflection. Therefore, the taper angle $\theta$ is controlled from 8° to 55°.

In some embodiments, the flared end face of the channel 2 has a flared taper depth of from 0.5 d to 6 d and d is an diameter of the channel 2. Since the microchannel plate 100 can realize the electron multiplication amplification under the condition of an external bias voltage, it is necessary to plate a conductive electrodes 11 on two end surfaces of the microchannel plate 100, as shown in FIG. 1. A input electrode depth H of the microchannel plate 100 is not less than 0.3 d, otherwise the process of plating an electrode tends to have a shading problem; when the flared taper depth h is smaller than or equal to an input electrode depth H, the charged particles entering the microchannel plate will be absorbed by the conductive electrode covering an inner wall of the channel, and effective flaring cannot be achieved, and therefore the flared taper depth h > 0.3 d, preferably the flared taper depth h $\geq$ 0.5 d; because the microchannel plate 100 performs etching flaring in a longitudinal depth of the channel and at the same time etches the channel wall in a transverse direction, when the flared taper depth h is too large, the channel wall will break. In summary, the preferred flared taper depth h is from 0.5 d to 6 d.

In some embodiments, high secondary electron yield species 12 are disposed on the flared end face of the microchannel plate 100. The high secondary electron yield species 12 are any one of $SiO_2$, MgO, $(Ba,Sr)TiO_3$, $RuO_2$, $Al_2O_3$, CsI, CsTe, KBr, ZnO, SrO, $Y_2O_3$, $B_2O_3$, ZnO, NaCl, or a diamond film. Preferably, $SiO_2$, MgO, $(Ba,Sr)TiO_3$, $RuO_2$, $Al_2O_3$, NaCl, etc. are suitable for the detection of particles such as electrons and ions; CsI, CsTe, KBr, ZnO, SrO, diamond film, $Y_2O_3$, $B_2O_3$, etc. are applicable to the detection of ultraviolet light, X-ray, ray, etc. The high secondary electron yield species 12 are deposited using at least one of deposition methods such as atomic layer deposition, electron beam evaporation coating, chemical vapor deposition, ion beam assisted deposition, thermal evaporation, laser pulse deposition, etc.

The embodiments of the present invention provide a preparation method of a microchannel plate, which includes the following steps of:

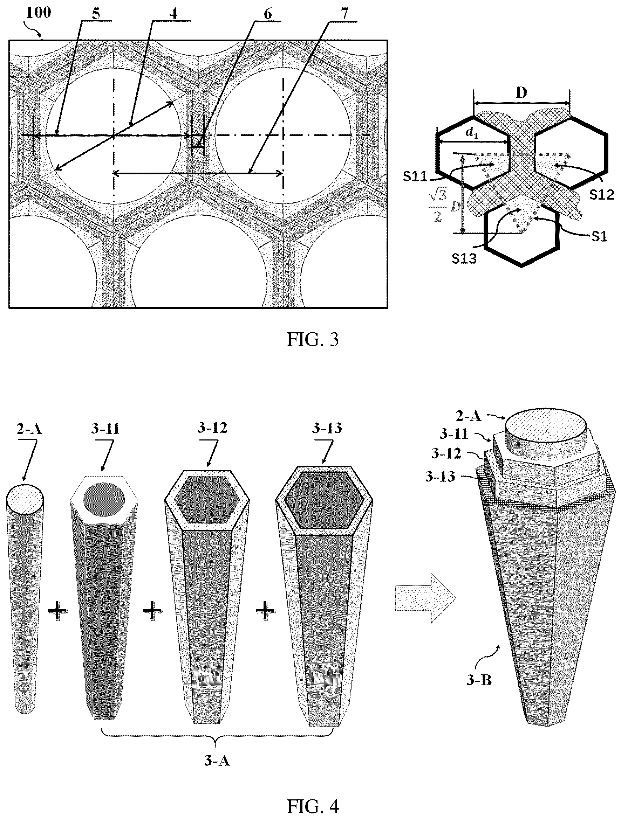

(1) As shown in FIG. 4, a third cladding tube, a second cladding tube and a first cladding tube are successively nested from the outside to the inside to constitute a hybrid cladding tube 3-A; the hybrid cladding tube 3-A nesting the core rod 2-A to form a hybrid glass rod-in-tube 3-B;

the core rod 2-A is cylindrical, the first cladding tube has a shape of being circular inside and hexagonal outside, the second cladding tube has a shape of being hexagonal both inside and outside, and the third cladding tube has a shape of being hexagonal both inside and outside; and
the first cladding glass 3-11, the second cladding glass 3-12 and the third cladding glass 3-13 have a pre-set etching property; and an etching rate of the first cladding glass 3-11 $\geq$ an etching rate of the second cladding glass 3-12 > an etching rate of the third cladding glass 3-13;

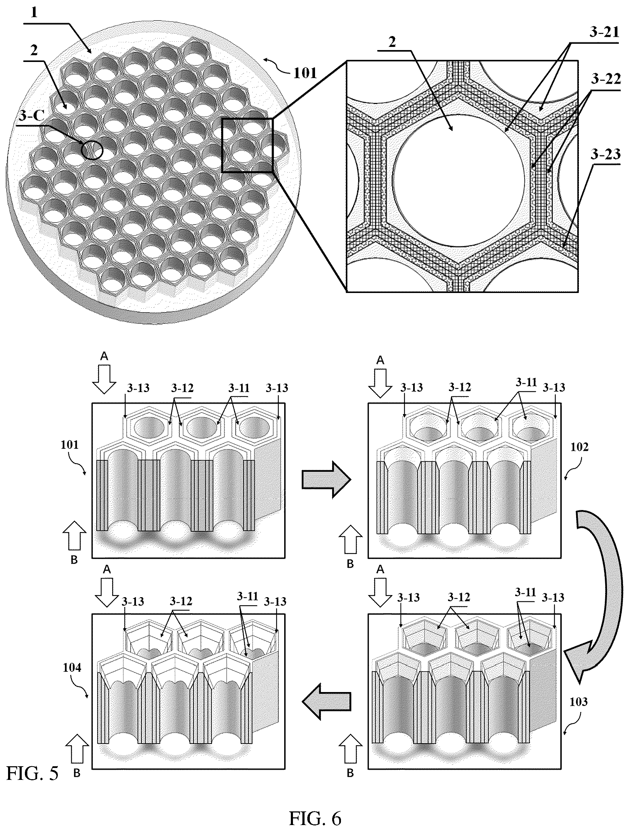

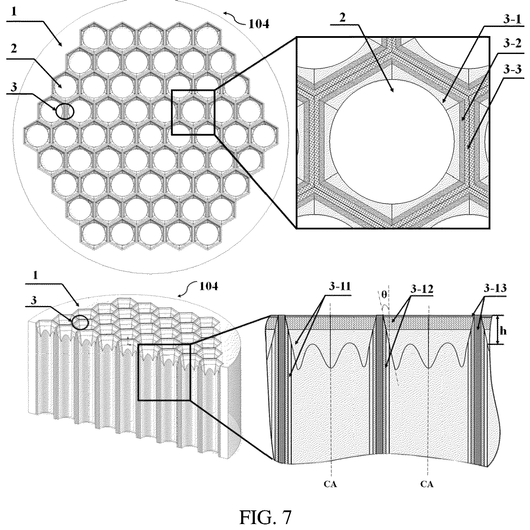

(2) The hybrid glass rod-in-tube 3-B into a solid wafer, and a core glass in the solid wafer is removed to obtain a microchannel plate wafer 101 with a channel, as shown in FIG. 5;
(3) Flared etching is performed on a first end face of the microchannel plate wafer 101, as shown in FIG. 6; at the flared end face of each of the channels, the first cladding glass 3-11 is completely etched and removed, the second cladding glass 3-12 is partially etched and removed, the inner and outer edges of the third cladding glass 3-13 are hexagonal, forming a honeycomb structure, so that the flared end face of the channel is a hexagonal tapered bore to obtain a flared microchannel plate wafer 104, as shown in FIG. 7;
(4) The flared microchannel plate wafer 104 is prepared into a microchannel plate 100.

Specifically, in step (1), as shown in FIG. 4, a first cladding tube is processed into a shape of being circular inside and hexagonal outside, a second cladding tube and a third cladding tube are both processed into a shape of being circular inside and hexagonal outside, a core rod 2-A is processed into a cylindrical shape, and the third cladding tube is successively nested inside and outside the second cladding tube, the first cladding tube constitutes a set of hybrid cladding tubes 3-A, and the set of hybrid cladding tubes 3-A is nested inside the core rod 2-A to constitute a hybrid glass rod-in-tube tube 3-B.

In step (2), the hybrid glass rod-in-tube 3-B is drawn into single-fibers, single-fibers specification are arranged into a multi-fiber rod, drawn into multi-fibers, and multi-fibers specification are arranged and then melt-pressed into a solid bundle. Then, the solid bundle is sliced, chamfered, ground and polished into the solid wafer; subsequently, the core glass of the solid wafer is etched by acids to form a plurality of through circular microporous channels, while the hybrid cladding glass is retained to form hybrid channel walls to prepare a microchannel plate wafer 101, as shown in FIG. 5. In FIG. 5, 1 is the solid border of microchannel plate, 2 is a microporous channel, 3-C is the cladding glass of the microchannel plate wafer 101, 3-21 is the first cladding glass 3-11 of the microchannel plate wafer 101, 3-22 is the second cladding glass 3-12 of the microchannel plate wafer 101, and 3-23 is the third cladding glass 3-13 of the microchannel plate wafer 101.

In step (3), dry etching is used as the flared etching and specifically includes at least one of plasma coupled etching, ion beam etching and reactive ion beam etching. The first cladding glass 3-11 is easy to be ion etched before the reduction treatment, the second cladding glass 3-12 is resistant to the ion etching before the reduction treatment, the third cladding glass 3-13 is resistant to the ion etching before the reduction treatment, and before the reduction treatment, the ion etching rate of the first cladding glass 3-11 $\geq$ the ion etching rate of the second cladding glass 3-12 > the ion etching rate of the third cladding glass 3-13.

The etching flaring process is as shown in FIG. 6, and the specific steps are as follows:

① The first cladding glass 3-11 is easily removed by ion etching before the reduction treatment, and the ion etching rate thereof is from 25 nm/min to 100 nm/min; preferably, the ion etching rate of the first cladding glass 3-11 before the reduction treatment is from 35 nm/min to 100 nm/min; as shown in FIG. 6, in the early stage of ion etching flaring (the first stage), the first cladding glass 3-11 near the input end face of the microchannel plate is firstly etched and is gradually etched away along an axial direction of the micropores, and the microchannel plate wafer 101 forms a microchannel plate wafer in a first flared stage 102 via etching flaring;
② The etching resistance of the second cladding glass 3-12 before the reduction treatment is higher than that of the first cladding glass 3-11 and lower than that of the third cladding glass 3-13; the second cladding glass 3-12 is not easy to be removed by ion etching before the reduction treatment, and the ion etching rate thereof is from 1 nm/min to 50 nm/min; preferably, the ion etching rate of the second cladding glass 3-12 before the reduction treatment is from 25 nm/min to 50 nm/min; and in the middle of etching flaring (the second stage), the first cladding glass 3-11 and the second cladding glass 3-12 near the input end face of the microchannel plate are successively etched and are gradually etched away along the axial direction of the micropores, and the microchannel plate wafer in a first flared stage 102 is further etched and flared to form a microchannel plate wafer in a second flared stage 103;

③ The third cladding glass is excellent in resistance to ion etching before the reduction treatment, the third cladding is extremely resistant to ion etching before the reduction treatment, and the ion etching rate thereof is from 0.01 nm/min to 25 nm/min, and preferably, the ion etching rate of the third cladding glass 3-13 before the reduction treatment is from 0.01 nm/min to 11 nm/min. At the later stage of etching flaring (the third stage), the first cladding glass 3-11 and the second cladding glass 3-12 near the input end face of the microchannel plate are successively etched and are gradually etched away along the axial direction of the micropore, and the third cladding glass is extremely resistant to ion etching and is not easily etched away; finally, at the flared opening end face of the most surface layer of each through hole, the first cladding glass is completely etched away, the second cladding glass is almost completely etched away, and the inner and outer edges of the third cladding glass are both hexagonal, forming a honeycomb structure; further etching flaring of the microchannel plate wafer in a second flared stage 103 results in the final flared microchannel plate wafer 104.

The flared microchannel plate wafer 104 is obtained from flared etching, as shown in FIG. 7. 3-1 is a projection view of a first cladding glass 3-11 on a flared end face; 3-2 is a projection view of a second cladding glass 3-12 on the flared end face; 3-3 is a projection view of the third cladding glass 3-13 on the flared end face; CA is a central axis of the channel; $\theta$ is a taper angle; and h is the taper depth.

In some embodiments, according to the preparation method, the first cladding glass 3-11, the second cladding glass 3-12, and the third cladding glass 3-13 are resistant to acid corrosion, and the core glass is acid-corrodible; in step (2), the core glass is removed by acid corrosion. Specifically, the etching acid solution is at least one acid solution of hydrochloric acid, nitric acid, citric acid and sulfuric acid of 0.1 mol/L to 3.0 mol/L. After the acid corrosion cleaning, the core glass in the solid wafer is removed to form a plurality of through circular microporous channels. The first cladding glass 3-11, the second cladding glass 3-12 and the third cladding glass 3-13 all have good acid resistance, specifically including resistance to corrosion by hydrochloric acid, nitric acid, citric acid and sulfuric acid, including resistance to corrosion by a solution of a mixture of at least two of hydrochloric acid, nitric acid, citric acid and sulfuric acid, and therefore the hybrid cladding glass can be retained to form a hybrid channel wall of the microchannel plate even after cleaning by acid corrosion.

In some embodiments, the first cladding tube has a diameter of from 2 $\mu$m to 50 $\mu$m. The larger the diameter of the channel 2 of the microchannel plate 100, the thicker the channel wall and the longer the time required for the flared etching. Therefore, orientation-dependent etching is more suitable for microchannel plates with small diameter channels. More preferably, the microchannel plate has a diameter of from 2 $\mu$m to 15 $\mu$m.

The embodiments of the present invention also provide for the application of the microchannel plate 100 in an image intensifier, an ion detector or detection instruments. The detection instruments include mass spectrometers, photoelectron spectrometers, electron microscopes, or photomultiplier tubes.

The present invention will now be further described with reference to specific examples, which are not to be construed as limiting the scope of the present invention, as non-essential modifications and adaptations thereof may occur to a person skilled in the art in light of the foregoing description and are to be included within the scope of the present invention.

Unless otherwise specified, the materials, reagents etc. referred to below are all commercially available products well known to a person skilled in the art; unless otherwise specified, such methods are well known in the art. Unless defined otherwise, technical or scientific terms used shall have the ordinary meaning as understood by a person skilled in the art to which the prevent invention belongs.

Embodiment 1

The present embodiment provides a microchannel plate and a preparation method thereof. The steps are specifically as follows:

(1) According to the size design, a first cladding tube having a shape of being circular inside and hexagonal outside, a second cladding tube having a shape of being hexagonal both inside and outside, and a third cladding tube having a shape of being hexagonal both inside and outside, and a cylindrical core rod 2-A are prepared. A third cladding tube, a second cladding tube and a first cladding tube are successively nested from the outside to the inside to constitute a hybrid cladding tube 3-A; the hybrid cladding tube 3-A nests the core rod 2-A to form a hybrid glass rod-in-tube 3-B; where the etching rate of the first cladding glass 3-11 is $\geq$ the etching rate of the preceding second cladding glass 3-12 > the etching rate of the preceding third cladding glass 3-13; and the cladding glass is resistant to acid corrosion, and the core glass is easily corroded by acid.

(2) The hybrid glass rod-in-tube 3-B is drawn by single-fibers and multi-fibers, and is melt-pressed into a solid bundle after the multi-fibers are arranged in specification. Then a solid wafer is prepared by slicing, chamfering, grinding and polishing, and after acid corrosion, the core glass in the solid wafer is removed to form a plurality of through circular microchannels, while the hybrid cladding glass is retained to form hybrid channel walls, and thus the solid wafer forms a microchannel plate wafer 101 as shown in FIG. 5;

(3) Flared etching is performed on a first end face of the microchannel plate wafer 101, the etching process is as shown in FIG. 6; at each flared end face, the first cladding glass 3-11 is completely etched and removed, the second cladding glass 3-12 is partially etched and removed, the inner and outer edges of the third cladding glass 3-13 are hexagonal, forming a honeycomb structure, so that the flared end face of the channel is a hexagonal tapered bore to obtain a flared microchannel plate wafer 104, as shown in FIG. 7; in the present embodiment, the microchannel plate flared wafer 104 has a taper angle $\theta$ of 20°.

(4) After the microchannel plate flared wafer 104 is plated with a metal electrode, as shown in FIGS. 1 and 2, high secondary electron yield species 12 is deposited on the flared end face for covering the end face of the third cladding glass 3-13, where the end face coincides with the inlet end face of the hexagonal tapered bore formed after the etching of the first cladding glass 3-11 and the second cladding glass 3-12, and a part of the hexagonal conical surface is in the first cladding glass 3-11 and the second cladding glass 3-12 to obtain the microchannel plate 100.

The characteristic parameters and tip discharge risk characteristics of embodiments 1-1 to 15 of the microchannel plates 100 of various sizes prepared in Embodiment 1 are as shown in Table 1.

Comparative Example 1

This comparative example provides a conventional funnel-shaped microchannel plate 200, as shown in FIG. 8, a single-layer or hybrid channel wall structure is adopted, specifically including that: the cladding tube has a circular hole inside and is cylindrical outside, the core rod has a cylindrical shape, and the outer cladding tube of the core rod constitutes a glass-rod-tube structure; then a solid wafer is prepared by single-fibers and multi-fibers drawing, melt-pressing, slicing, chamfering, grinding and polishing; after acid solution corrosion, the core glass in the solid wafer is removed to form a plurality of through circular microporous channels; the funnel-shaped microchannel plate 200 is then formed by wet etching (HF acid corrosion) or dry etching (one and/or at least two of plasma coupled etching, ion beam etching, reactive ion beam etching). 8 is a cladding glass with a conventional funnel-shaped end face; 8-1 is a projection view of the cladding glass on the flared end face; 8-2 is a cladding glass with a conventional funnel-shaped microchannel plate on the flared end face; 8-10 is a cladding glass of funnel-shaped microchannel plate; CA is a central axis of the channel and $\theta$ is a taper angle.

Comparative Example 2

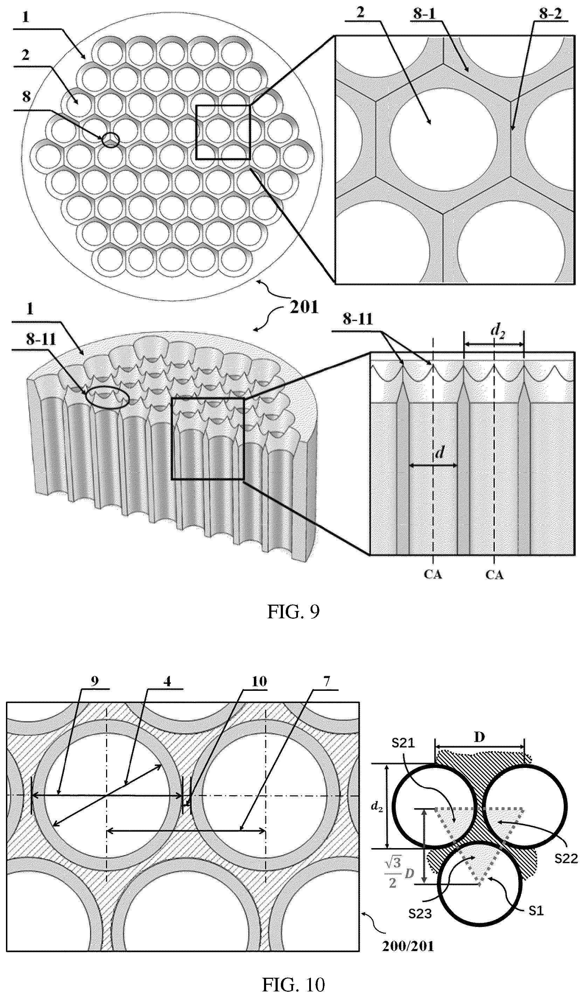

This comparative example provides a conventional funnel-shaped with a large open area ratio 201. On the basis of Comparative Example 1, further, after wet etching (HF acid corrosion) or dry etching (one and/or at least two of plasma coupled etching, ion beam etching, reactive ion beam etching), more of the cladding glass is etched or etched in a funnel-shaped manner to achieve an open area ratio of $\geq$ 90%, as shown in FIG. 9. 8-11 is the flared tips of input end face of a funnel-shaped microchannel plate with a large open area ratio.

The characteristic parameters and tip discharge risk characteristics of the conventional funnel-shaped microchannel plate 200 and the conventional funnel-shaped microchannel plate with a large open area ratio 201 of various sizes prepared in Comparative Examples 1 and 2 are as shown in Table 2.

As can be seen from the data in Tables 1 and 2, the microchannel plate 100 of the present invention can satisfy the flared end face channel wall thickness of $\geq$ 100 nm while having an open area ratio of $\geq$ 91%. The open area ratio of the input surface of the microchannel plate is significantly improved, the detection efficiency of the microchannel plate for the input signal is improved, and the tip discharge caused by the flared tip is avoided at the same time, so that the application scenario of the microchannel plate is expanded to cover the high/medium/low-surface electric field intensity application scenario, and the practicability of the flared microchannel plate is greatly improved.

Table 1 Main characteristic parameters and tip discharge risk characteristics of the embodiments

|  | Channel Diameter $\mu$m | Channel Pitch $\mu$m | Open area ratio % | Channel Wall thickness (nm) | Flared tip discharge risk |
|---|---|---|---|---|---|
| Embodiments 1-1 | 2 | 2.5 | 91.088% | 114.00 | None |
| Embodiments 1-2 | 3 | 3.75 | 91.088% | 171.0 | None |
| Embodiments 1-3 | 6 | 7.5 | 91.088% | 342.0 | None |
| Embodiments 1-4 | 10 | 12 | 91.088% | 547.2 | None |

(continued)

| | Channel Diameter μm | Channel Pitch μm | Open area ratio % | Channel Wall thickness (nm) | Flared tip discharge risk |
|---|---|---|---|---|---|
| Embodiments 1-5 | 12 | 15 | 91.088% | 684.0 | None |
| Embodiments 1-6 | 15 | 18.75 | 91.088% | 855.0 | None |
| Embodiments 1-7 | 20 | 25 | 91.088% | 1140.0 | None |
| Embodiments 1-8 | 50 | 62.5 | 91.088% | 2850.0 | None |
| Embodiments 1-9 | 2 | 2.5 | 92.160% | 100.0 | None |
| Embodiments 1-10 | 3 | 3.75 | 93.032% | 133.0 | None |
| Embodiments 1-11 | 6 | 7.5 | 93.032% | 266.0 | None |
| Embodiments 1-12 | 10 | 12 | 93.032% | 425.6 | None |
| Embodiments 1-13 | 12 | 15 | 93.032% | 532.0 | None |
| Embodiments 1-14 | 20 | 25 | 93.007% | 890.0 | None |
| Embodiments 1-15 | 50 | 62.5 | 93.022% | 2220.0 | None |

Table 2 Main characteristic parameters and tip discharge risk characteristics of the comparative examples

| | Diameter of channels μm | Channel Pitch μm | Open area ratio % | Wall thickness (nm) | Flared tip discharge risk |
|---|---|---|---|---|---|
| Comparative Example 1 | 2 | 2.5 | 90.461 % | 3.3 | Quite easy to perform tip discharge |
| Comparative Example 2 | 3 | 3.75 | 90.458% | 5.0 | Quite easy to perform tip discharge |
| Comparative Example 3 | 6 | 7.5 | 90.458% | 10.0 | Quite easy to perform tip discharge |
| Comparative Example 4 | 10 | 12 | 90.458% | 16.0 | Quite easy to perform tip discharge |
| Comparative Example 5 | 12 | 15 | 90.458% | 20.0 | Quite easy to perform tip discharge |
| Comparative Example 6 | 20 | 25 | 90.458% | 33.4 | Quite easy to perform tip discharge |
| Comparative Example 7 | 50 | 62.5 | 90.458% | 83.3 | Easy to tip discharge |

Embodiment 2

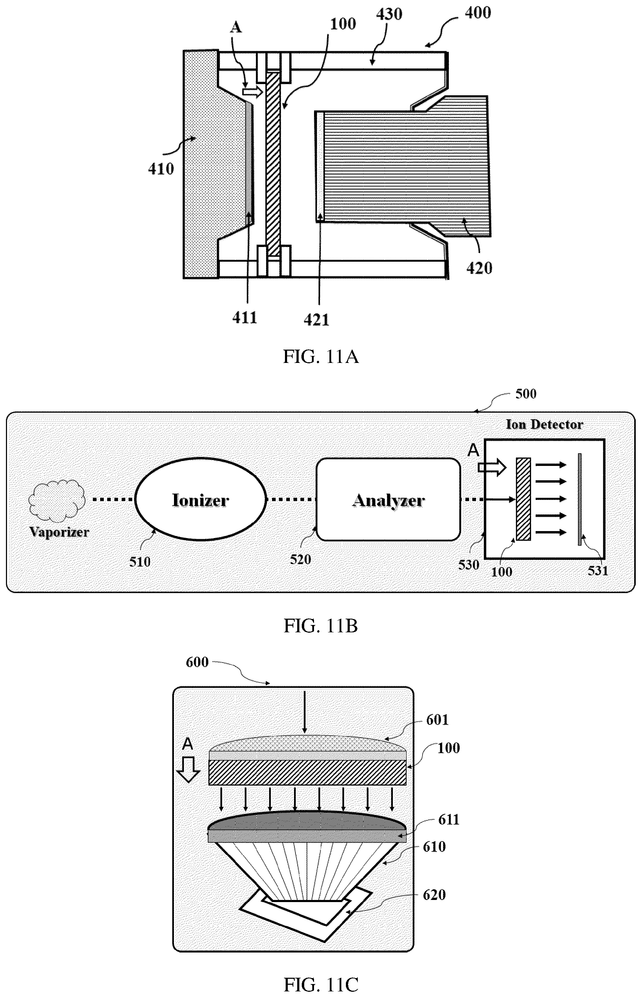

The present embodiment relates to the application of the microchannel plate 100 of the present invention, an image intensifier using the flared microchannel plate of the present invention as a signal multiplying material. As shown in FIG. 11A, the image intensifier 400 is provided with a vacuum container 430, an input window 410 is provided at the input end of the vacuum container 430, and an fiber optic plate 420 is provided at the other end of the vacuum container 430, and the microchannel plate 100 of the present invention is located between the input window 410 and the fiber optic plate 420. A photocathode 411 for converting light into electrons is provided on an inner surface of the input window 410 (located inside the vacuum container 430), and a phosphor screen 421 is provided on an inner surface of the fiber optic plate 420 (located inside the vacuum container 430). Preferably, the image intensifier 400 is designed to position the inventive microchannel plate 100 near the phosphor screen 421 to facilitate sufficient conversion of the multiplied electrons emitted by the inventive microchannel plate 100 into an optical signal to obtain a high-resolution imaging image.

Embodiment 3

The present embodiment relates to the application of the flared microchannel plate of the present invention as a mass spectrometer for signal detection. As shown in FIG. 11B, the mass spectrometer 500 is composed of an ionization unit 510 for ionizing a sample, an analysis unit 520 for separating the ionized sample according to a charge-to-mass ratio, and an ion detection unit 530 for detecting ions passing through the analysis unit 520. The ion detection unit 530 is provided with the microchannel plate 100 and the anode plate 531 of the present embodiment. The microchannel plate 100 of the present embodiment is capable of responding to incident ions and emitting secondary electrons, and functions as an electron multiplying material. The anode plate 531 functions to collect secondary electrons emitted from the microchannel plate.

Embodiment 4

The present embodiment relates to the application of the flared microchannel plate of the present invention, and an enhanced imaging detector using the flared microchannel plate of the present invention as a signal multiplying material, as shown in FIG. 11C, the input end of the enhanced imaging detector 600 is provided with the microchannel plate 100 of the present invention, a photocathode 601 (converting a ray or light signal into electrons) is provided at the input end face of the microchannel plate 100 of the present invention, a fiber optic taper 610 is provided at the other end of the enhanced imaging detector 600, and a phosphor screen 611 is provided on the surface of the large end of the fiber optic taper 610. A readout sensor 620, which is CCD or CMOS, is coupled to the small end surface of the fiber optic taper 610 to facilitate enhanced high resolution imaging detection via the small-sized readout sensor 620 after sufficiently converting the multiplied electrons emitted from the microchannel plate 100 of the present invention into an optical signal.

The technical features in the claims and/or the description of the present invention can be combined, and the combination is not limited to the combination obtained by the reference in the claims. The technical solution obtained by combining the technical features in the claims and/or the description is also the scope of the present invention.

While the present invention has been described in connection with what is presently considered to be the preferred embodiments, it is to be understood that the present invention is not to be limited to the disclosed embodiments, but on the contrary, is intended to cover various modifications and equivalent arrangements included within the spirit and scope of the appended claims.

## Claims

1.    A microchannel plate, wherein the microchannel plate is provided with a large number of channels penetrating in the thickness direction; on one side of an inlet end face of the microchannel plate, a flared end face of each channel is a hexagonal tapered bore; and in a cross-section perpendicular to an axial direction of each channel, the flared end face of the channel has an outer edge that is hexagonal and an inner edge that is circular.

2.    The microchannel plate according to claim 1, wherein the microchannel plate has a taper angle of from 8° to 55°; wherein the taper angle is an angle between a central axis of the channel and a conical surface at an open end of the channel.

3.    The microchannel plate according to claim 1, wherein the flared end face of the channel has a taper depth of from 0.5 d to 6 d, and d is an diameter of the channel.

4.    The microchannel plate according to claim 1, wherein the microchannel plate has an open area ratio of $\geq 91\%$ and the channel has a flared end face channel wall thickness of $\geq 100$ nm.

5.    The microchannel plate according to claim 1, wherein the flared end face is provided with high secondary electron yield species, the high secondary electron yield species being any one of $SiO_2$, MgO, $(Ba,Sr)TiO_3$, $RuO_2$, $Al_2O_3$, CsI, CsTe, KBr, ZnO, SrO, $Y_2O_3$, $B_2O_3$, ZnO, NaCl, or a diamond film.

6.    A preparation method of a microchannel plate, comprising the following steps of:

(1) successively nesting a third cladding tube, a second cladding tube and a first cladding tube from the outside to the inside to constitute a hybrid cladding tube; wherein the hybrid cladding tube is nested with a core rod to form a hybrid glass rod-in-tube;

the core rod is cylindrical, the first cladding tube has a shape of being circular inside and hexagonal outside, the second cladding tube has a shape of being hexagonal both inside and outside, and the third cladding tube has a shape of being hexagonal both inside and outside; and
the first cladding glass, the second cladding glass and the third cladding glass have a pre-set etching property, and an etching rate of the first cladding glass $\geq$ an etching rate of the second cladding glass> an etching rate of the third cladding glass;

(2) forming the hybrid glass rod-in-tube into a solid wafer, and removing core glasses in the solid wafer to obtain a microchannel plate wafer with channels;

(3) performing flared etching on a first end face of the microchannel plate wafer; wherein on the flared end face of each of the channels, the first cladding glass is completely etched and removed, the second cladding glass is partially etched and removed, the inner and outer edges of the third cladding glass are hexagonal, forming a honeycomb structure, so that the flared end face of the channel is a hexagonal tapered bore to obtain a flared microchannel plate wafer; and

(4) preparing the flared microchannel plate wafer into a microchannel plate.

7. The preparation method according to claim 6, wherein the first cladding tubes have an diameter of from 2 $\mu$m to 50 $\mu$m.

8. The preparation method according to claim 6, wherein
the etching rate of the first cladding glass is from 25 nm/min to 100 nm/min; the etching rate of the second cladding glass is from 1 nm/min to 50 nm/min; and the etching rate of the third cladding glass is from 0.01 nm/min to 25 nm/min.

9. The preparation method according to claim 6, wherein the first cladding glass, the second cladding glass, and the third cladding glass are resistant to acid corrosion, and the core glass is acid-corrodible; in step (2), the core glass is removed by acid corrosion.

10. Application of the microchannel plate according to any one of claims 1 to 5 in an image intensifier, an ion detector or a detection instrument.

FIG. 1

FIG. 2

FIG. 3

FIG. 4

FIG. 5

FIG. 6

FIG. 7

FIG. 8

FIG. 9

FIG. 10

FIG. 11A

FIG. 11B

FIG. 11C

## INTERNATIONAL SEARCH REPORT

| International application No. |
|---|
| **PCT/CN2024/124318** |

**A. CLASSIFICATION OF SUBJECT MATTER**

H01J 43/22(2006.01)i

According to International Patent Classification (IPC) or to both national classification and IPC

**B. FIELDS SEARCHED**

Minimum documentation searched (classification system followed by classification symbols)

IPC: H01J

Documentation searched other than minimum documentation to the extent that such documents are included in the fields searched

Electronic data base consulted during the international search (name of data base and, where practicable, search terms used)

CNTXT, ENTXTC, ENTXT, DWPI, CNKI: 倍增, 二次电子, 二次发射, 微通道, 开口比, 开口率, 六方形, 六边形, multipli+, secondary, electron, emission, microchannel, MCP, opening, ratio, hexagon+

**C. DOCUMENTS CONSIDERED TO BE RELEVANT**

| Category* | Citation of document, with indication, where appropriate, of the relevant passages | Relevant to claim No. |
|---|---|---|
| PX | CN 117612924 A (CHINA BUILDING MATERIALS ACADEMY) 27 February 2024 (2024-02-27) description, paragraphs [0006]-[0023] | 1-10 |
| A | CN 113451089 A (NORTH NIGHT VISION SCIENCE & TECHNOLOGY (NANJING) RESEARCH INSTITUTE CO., LTD.) 28 September 2021 (2021-09-28) entire document | 1-10 |
| A | CN 111128641 A (NORTH NIGHT VISION TECHNOLOGY CO., LTD.) 08 May 2020 (2020-05-08) entire document | 1-10 |
| A | US 2019096623 A1 (WAGNER, R. G. et al.) 28 March 2019 (2019-03-28) entire document | 1-10 |
| A | US 2013313422 A1 (HAMAMATSU PHOTONICS K. K.) 28 November 2013 (2013-11-28) entire document | 1-10 |

☐ Further documents are listed in the continuation of Box C.     ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **02 January 2025** | **06 January 2025** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/124318**

| Patent document cited in search report | | | Publication date (day/month/year) | Patent family member(s) | | | Publication date (day/month/year) |
|---|---|---|---|---|---|---|---|
| CN | 117612924 | A | 27 February 2024 | None | | | |
| CN | 113451089 | A | 28 September 2021 | None | | | |
| CN | 111128641 | A | 08 May 2020 | None | | | |
| US | 2019096623 | A1 | 28 March 2019 | US | 10403464 | B2 | 03 September 2019 |
| US | 2013313422 | A1 | 28 November 2013 | US | 8878128 | B2 | 04 November 2014 |

Form PCT/ISA/210 (patent family annex) (July 2022)